# EUROPEAN PATENT APPLICATION

(11) **EP 2 789 928 A1**
(43) Date of publication of application: **15.10.2014**
(21) Application number: 11876212.9
(22) Date of filing: 21.11.2011
(51) Int. Cl.: F24J 2/12, F24J 2/54, F28D 20/00, B01J 19/12

(54) **PARABOLIC CONCENTRATING SOLAR COLLECTOR**

(71) Applicant: Guradoor, S.L., 38390 Santa Úrsula (ES)
(72) Inventor: GONZÁLEZ GONZÁLEZ, Daniel, E-38390 Santa Úrsula (ES)
(74) Representative: Gil-Vega, Victor
(86) International application number: PCT/ES2011/070805
(87) International publication number: WO 2013/076318

(57) **Abstract**

The invention relates to a concentration parabolic solar collector (1) formed by a paraboloid supported by a socket mechanism (3) suitable for tracking the sun. The collector is characterized in that a shaft (4) is disposed at the centre of the base of the paraboloid, said shaft being provided with a catalytic reactor (5) at the end opposite the surface of the paraboloid, as well as upward supply pipes (6) arranged therein for the passage of the primary products to the reactor and downward collection pipes (7).

## Description

### Object of the invention

The present invention relates to a Concentration Parabolic Solar Collector, and more specifically, to a Concentration Parabolic Solar Collector comprising a catalytic reactor.

The solar collector according to the invention allows the obtaining of different useful products for the generation of clean energy through different catalytic reactions, from the energy and steam generated by the collector itself, thanks to the design of a single group based on a parabolic solar concentration element and a reactor incorporated into such element.

Consequently, the object of the invention is to provide a Concentration Parabolic Solar Collector incorporating a catalytic reactor where, through the appropriate starting products and the relevant catalysers, a series of end products, such as hydrogen, methane or lower alcohols may be obtained, thus allowing the storage of solar energy.

### Background of the Invention

The Concentration of sun light is achieved by means of different optical devices that are collectively named concentration collectors. These collectors comprise a receiver and the concentrator itself. The light strikes on the concentrator and is reflected towards the receiver, which is the element of the system where radiation is absorbed and converted into another type of energy, namely thermal or chemical energy.

In this respect, the electrolysis of water is a well known technology. Theoretically, it can be affirmed that the electrolysis of water occurs when an electrical current flows between two electrodes immersed in the electrolyte. The electrolysis process may be carried out both at room temperature and at high temperatures, and in this latter case, steam is obtained instead of water. The advantage of this approach is that it requires a lower electrical power input, as the electrolysis process depends on temperature. In this case, the energy supplied as heat is not subject to the limits set by the performance of the ideal Carnot cycle in the conversion of thermal power into electricity. This advantage may also be used in the case of the thermochemical methods used for the production of hydrogen, where a high-temperature heat source is used to perform an endothermic reaction. Early research in this field was very closely linked to the development of nuclear power. These thermochemical cycles that are already known are neither exclusively of a nuclear nor of a solar nature since, generally speaking, they can be used with both sources of energy. However, those which are used with nuclear reactors are characterised in that they use "moderate" temperatures (not exceeding 1000K), that guarantee a safe reactor operation. In the solar case, the temperature limits are not so restrictive. High temperatures are preferably obtained by means of solar towers and parabolic dishes, these devices being included within the category of focus concentrator collectors. These concentration collectors differ from those of a fixed or semi-fixed type in that they comprise a sun tracking mechanism; thus, the concentrator is always orientated towards the sun disc, and the direct radiation strikes perpendicularly on the concentrator.

The high flows of radiation achieved with the optical solar concentration systems achieve stationary temperatures exceeding 3000K, that allow the conversion of solar energy into thermal energy at temperatures of 2000K or more, that are used in the 2-stage thermo-chemical cycles based on the reduction of a metal oxide. The first stage, i.e., the endothermic stage, consists of the reduction, by means of the solar energy, of the metal oxide (MxOy). As it can be observed, the product obtained from this reduction may be a metal or a lower valence metal oxide. It is also possible to perform a carbon reduction of the metal oxide, using carbon or natural gas as reducing agent. The second stage, which does not require solar energy, is the exothermic hydrolysis of water, along with the metal oxidation, to obtain hydrogen and the relevant metal oxide. Different tests have demonstrated that the separation of the water molecule is an exothermic reaction, with a reasonable completion rate when steam is bubbled through the molten metal, at temperatures of approximately 700K. The result of the net reaction is hydrogen gas and oxygen gas. However, as the hydrogen and the oxygen are obtained in different steps, in is not necessary to separate them at high temperatures.

Thus, in the case of the storage of energy as hydrogen, on the basis of high temperature thermo-chemical reactions, it is necessary to obtain high temperature water steam by maximizing the use of the solar energy, and to have a catalytic reactor available where the necessary thermo-chemical reactions may be performed. These or similar considerations would also be of application for the storage of solar energy as other products, for instance, as methane or lower alcohols (ethanol, methanol), and in all those cases, the sun collected in a solar collector is the direct energy source to provide the required reaction temperature of the different thermo-chemical processes.

In this context, several types of devices are well known for the use of solar energy to obtain electricity, and among them the following three main types should be highlighted: flat panels, semi-cylindrical collectors and parabolic collectors. For instance, ES 1 066 621, "Solar panels system", describes a system comprising a structural supporting frame for solar panels which is tiltably mounted around a horizontal mid axis fixed to a set of supports and aligned in the direction of one of the two larger dimensions thereof, such structural frame being provided, correspondingly with two opposite points of the solar panels arrangement, with two connectors which, through a pair of swivel connections, attach one of such connectors to one of the ends of a first floating conductor section which at the other end comprises another swivel connector which is directly attached to an assembly located outside the structural framework and which acts as a control and management circuit for the power that flows through the solar panels, while the other connector is attached to one of the ends of a second floating conductor section which, at the other end, and through another swivel connector item, is attached to a third floating conductor section which is also connected, by means of a swivel connector, to such external assembly which acts as a control circuit of the structural framework and serves to manage the solar energy that flows through the solar panel layout. Document US 4.286.579 describes a system for collecting solar energy comprising a parabolic reflector, a linear evaporation pipe aligned with the focal line of the parabolic reflector and a fluid which is fed to the inlet end of the evaporation pipe to transfer heat from the fluid by means of a heat exchanger.

However, all these collectors known in the prior art do not provide in a single device the ability to use solar energy directly and obtaining products which allow their storage, by incorporating a catalytic reactor to the Concentration Parabolic Solar Collector.

### Description of the invention

The invention provides a Concentration Parabolic Solar Collector which comprises a catalytic reactor where, through the appropriate starting products and the relevant catalysers, a series of end products, such as hydrogen, methane or lower alcohols are obtained, allowing the storage of solar energy.

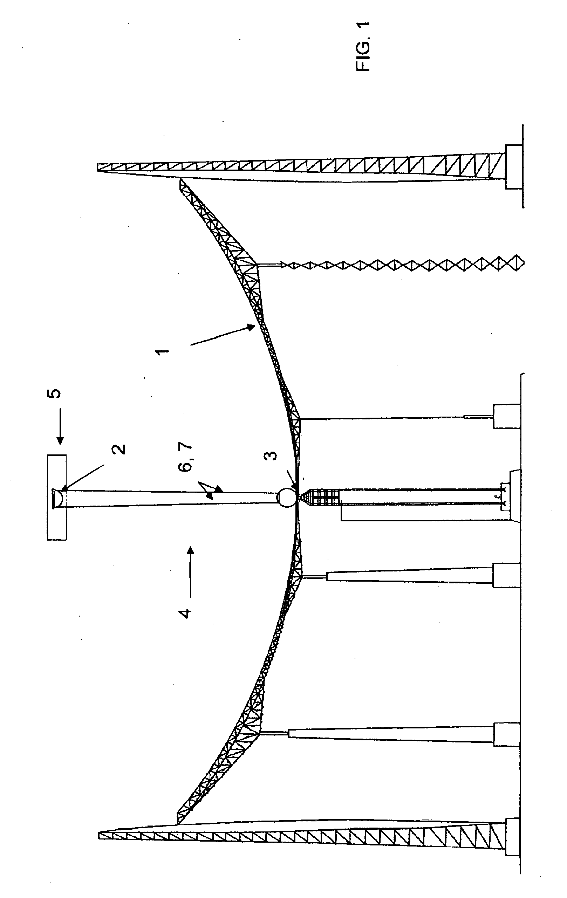

The invention will be described hereinafter, on the basis of an exemplary embodiment of the same and referring to Figure 1, which shows a view of the Concentration Parabolic Solar Collector according to the invention.

Thus, the Concentration Parabolic Solar Collector (1) according to the invention is based on a paraboloid dish coated with a reflective material, whose curvature equals that of the paraboloid, so that the reflection of solar energy allows concentrating it on a point or focus (2), where a Fresnel lens has been arranged. The collector is supported on a ball and socket mechanism (3) and is adapted for the tracking of the sun disk to maximise energy collection. The centre of the paraboloid base contains a perpendicular shaft (4), whose opposite end houses a catalytic reactor (5) where the thermo-chemical reactions allowing the storage of the solar energy from the concentrator as chemical energy, either as hydrogen gas, as lower alcohol or as methane gas, on the basis of the relevant catalysers, occur. For the supply of the starting materials required for these catalytic reactions, the above-mentioned shaft contains a series of upwards supply pipes (6) to allow the passage of the starting materials towards the reactor, as well as downwards collection pipes (7) that allow the exchange of heat and the collection of the final gas products (hydrogen, lower alcohols or methane) towards a storage tank, previously passing them through a gas exchanger, if so required.

In a preferred embodiment of the invention, the Concentration Parabolic Solar Collector comprises a catalytic reactor to obtain hydrogen from the steam supplied to the reactor through the above-mentioned upwards pipe. For that purpose, a metal oxide is used at the reactor as catalyser, preferably a redox pair of zinc oxide and zinc, according to the general equation:

MₓO_{y} → xM + y/2O₂

With the preferred redox pair of zinc oxide and zinc:

ZnO(s) →Zn(g) + 0,5O₂ approx. 3500K

Zn(l) + H₂O(g) → ZnO(s) + H₂(g)

The first stage, which is an endothermic reaction, comprises the reduction through the solar energy of the metal oxide MxOy, preferably ZnO, by supplying to the catalyser, which is molten by the solar energy concentrated at the reflector, water steam obtained from the solar collector itself. The hydrolysis of the water, comprising the oxidation of the metal, is an exothermal process for the generation of hydrogen gas, while the metal oxide used is recovered at the catalyst tank. The hydrogen gas obtained is cooled as it circulates through the downwards pipe of the collector shaft, and is subsequently stored. The oxygen obtained as a by-product can be extracted from the reactor for its eventual subsequent use in other processes, and in this case, the gas exchanger which has been mentioned above would be no longer necessary.

In another preferred embodiment of the present invention, the Concentration Parabolic Solar Collector includes a catalytic reactor to obtain methane from water gas supplied to the reactor by means of the methanation of carbon dioxide, or Sabatier reaction, or of carbon monoxide, and in this case, the catalyst consists of TiO₂-Pt-Cu in solid phase, according to the reaction:

4H₂+ CO₂ → CH₄+2H₂O

3H₂ + CO → CH₄+ H₂O

In yet another embodiment, the Concentration Parabolic Solar Collector includes a catalytic reactor to obtain lower alcohols from a synthesis gas, for instance, following a Lurgi-type process, through the supply of hydrogen gas to the catalyst, according to the following scheme,

CO + H₂ → CH₃OH CO₂ + H₂ → CH₃OH

Or also through the supply of steam, according to the following equations:

CO₂ + H₂O → CH₃OH + O₂

CO₂ + H₂O → C₂H₅OH + O₂

In order to achieve this, the reactor includes an Al/Al₂O₃ type catalyst, so the reaction progresses at a temperature of 420°C and under atmospheric pressure.

## Claims

1. Concentration Parabolic Solar Collector (1) comprising a paraboloid supported on a ball and socket mechanism (3) adapted to track the sun disk, **characterised in that** a shaft (4) is perpendicularly arranged at the centre of the paraboloid base whose opposite end houses a catalytic reactor (5) and upwards supply pipes (6) to allow the flow of the starting materials towards the reactor, as well as downwards collection pipes (7).

2. Concentration Parabolic Solar Collector (1) according to claim 1, **characterised in that** the catalytic reactor (5) comprises a zinc oxide-zinc redox pair catalyst which is fed through the upwards pipe (6) with water steam to obtain hydrogen.

3. Concentration Parabolic Solar Collector (1) according to claim 1, **characterised in that** the catalytic reactor (5) comprises a TiO₂-PtCu catalyst which is fed through the upwards pipe (6) with water gas or carbon dioxide and hydrogen to obtain methane.

4. Concentration Parabolic Solar Collector (1) according to claim 1, **characterised in that** the catalytic reactor (5) comprises an Al/Al₂O₃ catalyst which is fed through the upwards pipe (6) with synthesis gas and hydrogen gas to obtain lower alcohols.
